# EUROPÄISCHE PATENTSCHRIFT

(11) **EP 1 900 500 B1**
(45) Veröffentlichungstag und Bekanntmachung des Hinweises auf die Patenterteilung: **11.02.2009**
(21) Anmeldenummer: 07013651.0
(22) Anmeldetag: 12.07.2007
(51) Int. Cl.: B29C 65/10, E04D 15/06

(54) **Heissluftdüse**
Hot air jet
Buse d'air chaud

(30) Priorität: 15.09.2006 DE 202006014390 U
(43) Veröffentlichungstag der Anmeldung: 19.03.2008
(73) Patentinhaber: Leister Process Technologies, 6056 Kägiswil (CH)
(72) Erfinder: Gisler, Lukas, 6055 Alpnach Dorf (CH); Niederberger, Adolf, 6056 Kägliswil (CH); Lustenberger, Mauriz, 6010 Kriens (CH)
(74) Vertreter: Klocke, Peter

(56) Entgegenhaltungen:
- CH-A5- 694 088
- DE-A1- 1 652 399
- US-A1- 2003 019 586

## Beschreibung

Die vorliegender Erfindung betrifft eine Heißluftschweißdüse für eine Heißluftschweißeinrichtung zum Verschweißen von überlappend angeordneten flächigen Dichtungsbahnen, insbesondere Bitumen-Dichtungsbahnen, mit einem Heißluftanschluss, einer oberen und einer unteren Heizplatte, die einen Luftraum bilden, und mindestens einer stirnseitigen Rückwärts-Austrittsöffnung zwischen der oberen und unteren Heizplatte, die in Schweißrichtung gesehen einer hinten an der Heißluftschweißeinrichtung angeordneten Anpressrolle zugewandt ist.

Derartige Heißluftschweißdüsen sind für Heißluftschweißvorrichtungen bekannt, die an einem fahrbaren Chassis ein um eine horizontale Achse schwenkbares Heißluftgerät aufweisen, so dass für den Schweißvorgang die an dem einen Ende des Heißluftgeräts angeordnete Heißluftschweißdüse seitlich zwischen die flächig überlappend angeordneten Dichtungsbahnen gebracht wird. Bei der Bewegung der Heißluftschweißeinrichtung entlang den Rändern der Dichtungsbahnen wird die untere Dichtungsbahn auf der Oberseite und die obere Dichtungsbahn auf der Unterseite von der durch die auf der Oberseite und der Unterseite der Düse austretenden Heißluft erwärmt. Darüber hinaus folgt eine starke Erwärmung durch den Heißluftaustritt an der Rückwärts-Austrittsöffnung der Düse kurz bevor eine Anpressrolle der Heißluftschweißeinrichtung die Dichtungsbahnen aufeinander drückt. Um eine gute Führung der Dichtungsbahnen über die Heißluftschweißdüse zu gewährleisten, weist eine bekannte Heißluftschweißdüse eine im Querschnitt keilförmige Form auf, derart dass das schmälere Ende auf der dem Heißluftanschluss entfernten Seite sich befindet. Des Weiteren sind die Austrittsöffnungen auf der Ober- und Unterseite der Heizplatte an dem der Rückwärts-Austrittsöffnung gegenüber liegenden Ende angebracht, um hier eine Vorwärmung der Dichtungsbahn zu bewirken. In der Praxis hat sich jedoch gezeigt, dass der Schweißvorgang mit einer derart ausgestalteten Heißluftschweißdüse nicht mit zufriedenstellender Geschwindigkeit durchgeführt werden kann.

So beschreibt beispielsweise die Offenlegungsschrift DE 1 652 399 eine Vorrichtung zum Erwärmen von Materialbahnen, damit diese plastisch und selbstklebend werden, so dass sie auf einer Unterlage haften. Die in Rollen angelieferte Material wird derart an einer Brennereinrichtung für gasförmige oder flüssige Brennstoffe vorbeigeführt, dass es von den heißen Brennerflammen oder Abgasen in zwei Richtungen nach oben und unten parallel zu seiner Laufrichtung bestrichen wird. Dabei werden durch ein Geräteabdeckblech, durch Seitenbleche und durch eine Anzahl hochkant stehender Stege und die Materialbahn selbst mehrere Kanäle gebildet, mit dem Zweck, die heißen Abgase auf. die zu erwärmende Materialbahn zu leiten.

Die Patentschrift CH 694 088 A5 offenbart ein Verfahren und eine Vorrichtung zum vollflächigen Verschweißen von Bitumenbahnen auf Betonflächen, wobei eine Bitumenbahn mindestens teilweise auf einer Betonfläche ausgelegt und ein heißgasbeheizter Heizkeil zwischen die Bitumenbahn und die Betonfläche eingebracht wird. Der Heizkeil, der quer zur Längserstreckung der Bitumenbahn angeordnet wird, ist dabei im Wesentlichen von der Bitumenbahn und der Betonfläche umschlossen und erwärmt diese derart, dass sie bei Kontakt miteinander verschweißen. Zum Verbinden der Materialbahn mit der Betonfläche wird der Heizkeil in Richtung der Längserstreckung der Bitumenbahn bewegt und von einer Anpresswalze gefolgt, welche die erwärmte Bitumenbahn an die erwärmte Betonoberfläche anpresst. Die Vorrichtung weist einen Heißgasgenerator mit einer mit einem gasförmigen oder flüssigen Brennstoff betriebenen Brennkammer für die Beaufschlagung eines hohlen Heizkeil mit dem Heißgas auf. An dem als Hohlkörper ausgebildeten Heizkeil ist mindestens eine Austrittsöffnung für das Heißgas in einem Bereich vorgesehen, der im Betrieb mit mindestens einem Teil der zu verschweißenden Oberflächen der Thermoplastbahn und/oder der Unterlage einen im Wesentlichen umschlossenen Bereichs bildet. Dabei weist der Heizkeil vorzugsweise auf der einer bevorzugten Verfahrrichtung entgegengesetzten Seite und/oder auf seiner Unterseite eine oder mehrere Austrittsöffnungen für das Heißgas auf.

Weiterhin ist in der US2003/0019586 A1 ein Gerät zum thermischen Verbinden von Dachfolien behandelt, bei dem eine spezielle Heißluftdüse und eine spezielle Anpressrollenanordnung vorgesehen ist, um eine kontinuierliche Schweißnaht insbesondere bei punktuellen Erhöhungen des Untergrundes sicher zu stellen. Eine von einem Fahrgestell getragene Heizeinrichtung bläst erwärmte Luft zwischen die beiden zu verschweißenden Materialbahnen. Die Heizeinrichtung beinhaltet eine Heißluftdüse mit einer Vielzahl von Kanälen, wobei äußeren Kanäle den beiden Materialbahnen während des Schweißvorgangs unmittelbar gegenüber liegend angeordnet sind, während ein oder mehrere mittlere Kanäle etwas erhöht gegenüber der unteren Folienbahn und direkt angrenzend an die obere Bahn vorgesehen sind. Die Rollenanordnung zum Zusammenpressen der erhitzten Folienbahnen ist wie üblich unmittelbar nach der Heißluftdüse an dem Fahrgestell angebracht und beinhaltet mehrere nebeneinander positionierte Rollen. Zwei äußere Anpressrollen üben ständig Druck auf die erhitzten Materialbahnen auf, während die übrigen weiter innen angeordneten Rollen federbelastet an den Bahnen anliegen. Auf diese Weise beeinflussen geringe Erhebungen unter den Materialbahnen die Qualität des Schweißnaht nur unwesentlich.

Der vorliegenden Erfindung liegt daher Aufgabe zugrunde, eine Möglichkeit vorzuschlagen, mit der eine schnellere Verschweißung von Dichtungsbahnen, insbesondere Bitumen-Dichtungsbahnen, erreicht werden kann.

Diese Aufgabe wird erfindungsgemäß durch eine Heißluftschweißdüse mit den Merkmalen des Hauptanspruchs sowie eine Heißluftschweißeinrichtung mit einer derartigen Heißluftschweißdüse gelöst. Weitere vorteilhafte Ausgestaltungen sind den Unteransprüchen zu entnehmen.

Gemäß der Erfindung weist die Heißluftschweißdüse mindestens eine Vorwärts-Austrittsöffnung auf, die in Bewegungsrichtung der Heißluftschweißeinrichtung der Rückwärts-Austrittsöffnung gegenüberliegend vorgesehen ist. Hierdurch wird erreicht, dass der gesamte wirksame Heizbereich, in dem die Dichtungsbahnen vorgewärmt und anschließend für den Schweißvorgang plastifiziert werden, wesentlich vergrößert ist. Die Dichtungsbahnen erreichen bereits angewärmt die Heizplatten, auf denen vorzugsweise die Austrittsöffnungen über die gesamte Fläche gleichmäßig verteilt sind, um dann nach der Heizplatte vor die Rückwärts-Austrittsöffnung zu gelangen, wo sie für den anschließenden Schweißvorgang ausreichend plastifiziert werden. Sowohl die Rückwärts-Austrittsöffnung als auch die Vorwärts-Austrittsöffnung können schlitzförmig als eine Öffnung oder mit Unterbrechung als mehrere Öffnungen oder Bohrungen ausgeführt sein, die sich in bekannter Weise über die gesamte Breite der Düse erstrecken. Um zu verhindern, dass die aus den Rückwärts- und Vorwärts-Austrittsöffnungen austretende Heißluft nicht zwischen den Dichtungsbahnen über den Rand der unteren Folie gelangt und dort die darunter befindliche Isolierschicht zerstört, sind an der Heißluftschweißdüse außerdem mindestens auf der inneren, dem Heißluftanschluss entfernten Seite, die Heizplatten stirnseitig überragende Luftführungen angeordnet. Diese verhindern die Bewegung der Heißluft in unerwünschte Bereiche und sorgen dafür, dass die Heißluft genau in dem für die Schweißung wichtigen Bereich verbleibt.

Gemäß einer weiteren Ausbildung der Erfindung sind die obere und die untere Heizplatte im Wesentlichen parallel zueinander angeordnet. Damit ergibt sich sowohl bei der Rückwärts-Austrittsöffnung als auch bei der Vorwärts-Austrittsöffnung ein gleichmäßiger Luftaustrittsbereich, vorzugsweise über die gesamte Breite der Heißluftschweißdüse, wodurch eine gleichmäßigere Luftverteilung gegenüber den dreieckförmigen bekannten Austrittsöffnungen erreicht wird. Des weiteren können die Heizplatten Luftaustrittsöffnungen aufweisen, die vorzugsweise gleichmäßig verteilt sind und dadurch ein Heißluftpolster zwischen der oberen Heizplatte und der oberen Dichtungsbahn erzeugen. Die obere Dichtungsbahn kontaktiert damit teilweise die obere Heizplatte und andererseits wirkt die aus den Luftaustrittsdüsen austretende Heißluft. Neben der heißen Oberfläche der Heizplatte wirkt auch die austretende Heißluft erwärmend auf die Dichtungsbahn.

Vorteilhafterweise sind die Luftführungen als seitlich angeordnete Führungsbleche ausgebildet, die sich zum freien Ende hin verjüngen. Neben einer geordneten Luftführung wird durch diese Ausgestaltung auch erreicht, dass die Dichtungsbahnen, insbesondere die dicken Bitumen-Dichtungsbahnen, ohne Knick kontinuierlich auf die maximale Dicke der Düse im Bereich der Heizplatten angehoben wird. Dadurch wird eine gute Annäherung der Unterseite der oberen Dichtungsbahn an die Oberseite der oberen Heizplatte gewährleistet.

Gemäß einer weiteren besonderen Ausbildung der Erfindung ist im Bereich der Vorwärts-Austrittsöffnung eine in einer Ruhestellung der Düse an der Heißluftschweißeinrichtung in den aus dieser Düse austretenden Heißluftstrom schwenkbare Luftbremse angeordnet. In der Ruhestellung wird üblicherweise das an der Heißluftschweißeinrichtung angeordnete Heißluftgerät um eine horizontale Achse geschwenkt, so dass die Heißluftschweißdüse möglichst weit entfernt von der Dichtungsbahn kommt, damit die Dichtungsbahn nicht unbeabsichtigt erhitzt wird. Um zu verhindern, dass nun die aus der Vorwärts-Austrittsöffnung austretende Heißluft insbesondere die Dichtungsbahn aber auch andere Teile der Heißluftschweißeinrichtung erwärmt, ist diese schwenkbare Luftbremse vorgesehen. Vorteilhafterweise ist sie so ausgestaltet, dass die aus der Vorwärts-Austrittsöffnung austretende Heißluft im Wesentlichen wieder in Richtung der Heizplatten umgelenkt wird. Dies wird zweckmäßigerweise durch eine aus zwei Längswänden gebildete rinnenartige Luftumlenkeinrichtung realisiert.

Damit diese Luftbremse sicher funktioniert und bei der Ruhestellung, in der das Heißluftgerät noch in Betrieb ist, den austretenden Heißluftstrom abbremst bzw. umlenkt, ist die Luftbremse über einen Hebelarm schwenkbar mit einem Anschlag gelagert, so dass die Luftumlenkeinrichtung durch die Schwerkraft in die gewünschte Position gebracht wird. Vorzugsweise weist die Luftbremse ein Laufrad auf, welches beim Aufsetzen der Düse auf eine der Dichtungsbahnen die Luftumlenkeinrichtung aus dem Heißluftstrom schwenkt, auf der Dichtungsbahn entlang läuft und die Luftumlenkeinrichtung aus dem Heißluftstrom hält.

Mit der erfindungsgemäß ausgestalteten Heißluftschweißdüse bzw. der entsprechend ausgestalteten Heißluftschweißeinrichtung können Dichtungsbahnen, insbesondere Bitumen-Dichtungsbahnen, durch den langen Vorwärmbereich nunmehr wesentlich schneller verschweißt werden.

Weitere Merkmale und Vorteile der Erfindung ergeben sich aus der folgenden Beschreibung eines Ausführungsbeispiels in Verbindung mit den Ansprüchen und den Zeichnungen. Die einzelnen Merkmale können je für sich oder zu mehreren bei Ausführungsformen der Erfindung verwirklicht sein. Es stellen dar:
- Figur 1: einen Heißluftschweißautomaten mit einem Heißluftgerät in Betriebsstellung;
- Figur 2: den Heißluftschweißautomaten gemäß Figur 1 in der Ruhestellung mit hochgeklapptem Heißluftgerät;
- Figur 3: verschiedene Ansichten der Heißluftschweißdüse in der Betriebsstellung mit einer perspektivischen Ansicht (Figur 3a), eine Seitenansicht auf die Lagerung der Luftbremse (Figur 3c), eine Seitenansicht auf die Luftführungen (Figur 3b), eine Rückansicht (Figur 3d), eine Draufsicht (Figur 3e) und einen Schnitt durch den Luftraum und die Luftumlenkung entlang der Linie A-A (Figur 3f);
- Figur 4: verschiedene Ansichten der Heißluftschweißdüse in der Ruhestellung mit einer perspektivischen Ansicht (Figur 4a), eine Seitenansicht auf die Luftführungen (Figur 4b), eine Seitenansicht auf die Lagerung der Luftbremse (Figur 4c), eine Rückansicht (Figur 4d), eine Draufsicht (Figur 4e) und einen Schnitt durch den Luftraum und die Luftumlenkung entlang der Linie B-B (Figur 4f).

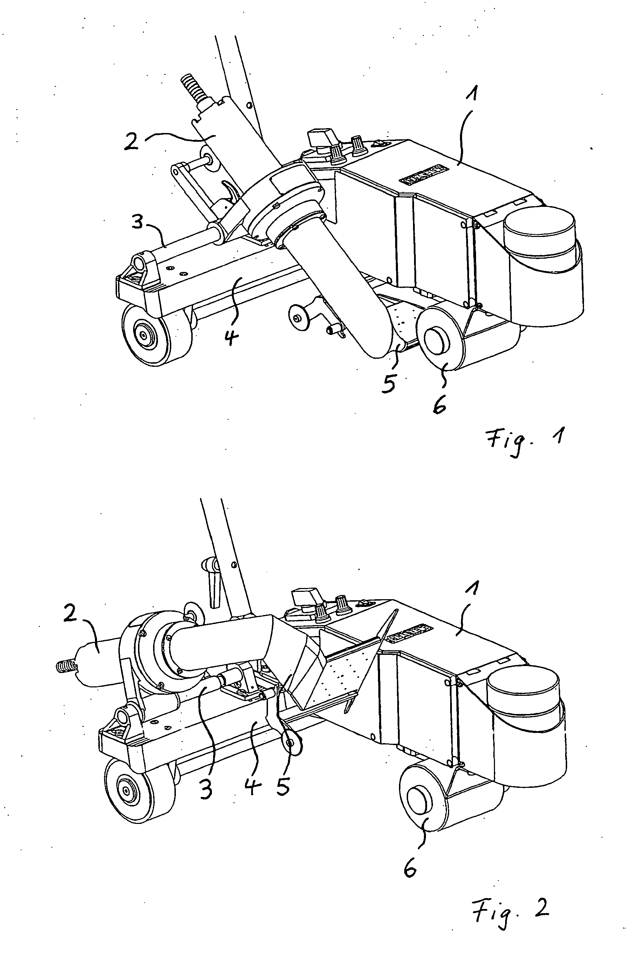

Figur 1 zeigt einen Heißluftschweißautomat 1, der an seinem Chassis 4 ein über eine horizontale Drehachse 3 schwenkbar gelagertes Heißluftgerät 2 aufweist. In dieser Figur ist das Heißluftgerät in der Arbeitsstellung, so dass sich die am Ende angeordnete Heißluftschweißdüse 5 in bekannter Art und Weise zwischen den beiden nicht dargestellten Dichtungsbahnen im Wesentlichen mit der Anpressrolle 6 fluchtend befindet. Mit der Unterseite der Heißluftschweißdüse 5 liegt diese in bekannter Art und Weise auf der Oberseite der nicht dargestellten unteren Dichtungsbahn auf, während die obere Dichtungsbahn über die Oberseite der Heißluftschweißdüse 5 geführt wird.

Figur 2 zeigt den Heißluftschweißautomat 1 mit dem Heißluftgerät in der Ruhestellung, in der die Heißluftschweißdüse 5 durch Drehung des Heißluftgeräts 2 um die Drehachse 3 von den Dichtungsbahnen entfernt und aus dem Bereich der Anpressrolle 6 herausgeschwenkt ist. Diese Verfahrensweise ist bei derartigen Heißluftschweißautomaten allgemein bekannt und üblich.

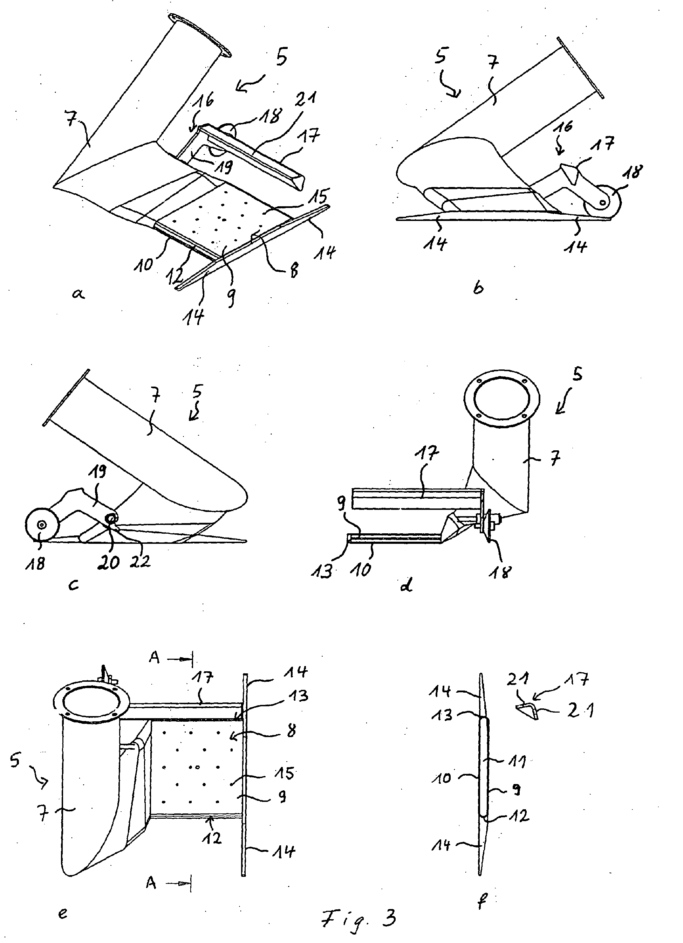

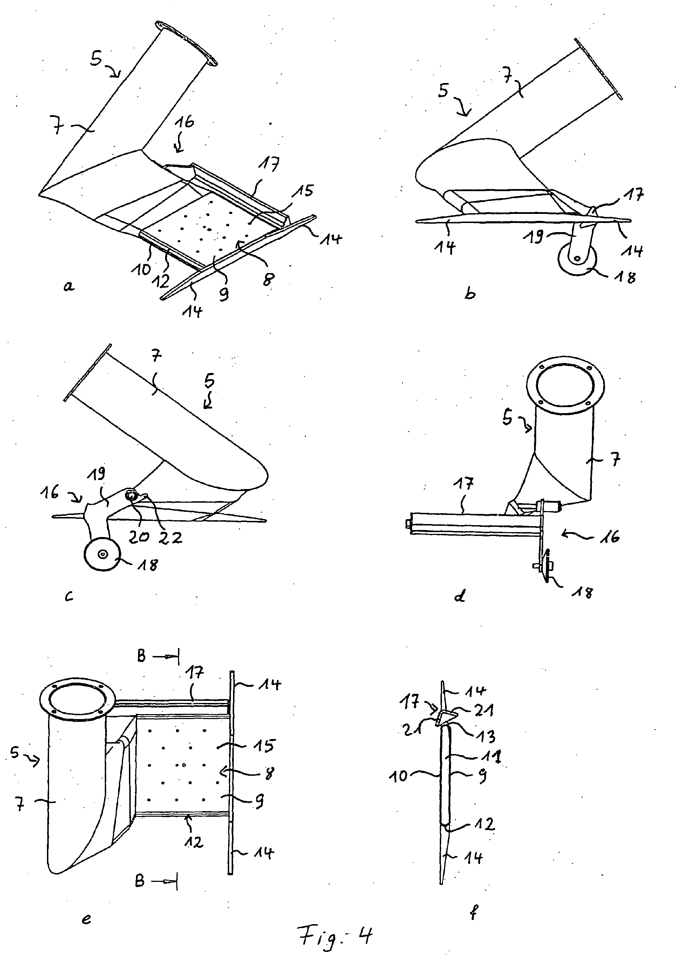

In den Figuren 3 und 4 ist die Heißluftschweißdüse 5 aus den Figuren 1 und 2 entsprechend in der Betriebsstellung (Figur 3) und der Ruhestellung (Figur 4) in verschiedenen Ansichten (Figuren 3a - 3f, bzw. 4a - 4f) dargestellt. Die perspektivische Ansicht gemäß den Figuren 3a und 4a zeigt die Heißluftzuführung 7 der Heißluftschweißdüse 5 mit der daran anschließenden oberen Heizplatte 9 mit gleichmäßig verteilten Luftaustrittsöffnungen 15. Entsprechende Luftaustrittsöffnungen 15 befinden sich auf der unteren Heizplatte 10. Die obere Heizplatte 9 und die untere Heizplatte 10 bilden einen Luftraum 11 (Figur 3f) mit der stirnseitigen Rückwärts-Austrittsöffnung 12 und der Vorwärts-Austrittsöffnung 13. Seitlich befindet sich jeweils eine Luftführung 14 in Form von Führungsblechen, die die durch die obere Heizplatte 9 und die untere Heizplatte 10 gebildete (Vorwärm)Heizzone 8 stirnseitig die Austrittsöffnungen 12, 13 überragen und dafür sorgen, dass die aus den Austrittsöffnungen 12, 13 austretende Heißluft nicht auf die andere Seite der Luftführungen 14 gelangen kann. Die Luftführungen 14 sind an ihren Enden auf der Oberseite abgeschrägt, so dass ein kontinuierlicher Übergang auf die Höhe der Heizzone 8 entsteht (Figur 3b).

An der Heißluftschweißdüse 5 ist eine Luftbremse 16 angeordnet, die über eine horizontale Achse 20 angelenkt ist und einen Hebelarm 19 aufweist, der eine Luftumlenkung 17 und ein Laufrad 18 trägt. Wie aus den Figuren 3b und 3c ersichtlich, befindet sich die Luftumlenkung 17 im Bereich des Winkels des Hebelarms 19 und in der Betriebsstellung entfernt von der Vorwärts-Austrittsöffnung 13. Das Laufrad 18 befindet sich auf der Höhe der Luftführungen 14 und läuft somit auf der nicht dargestellten unteren Dichtungsbahn. Aus der Schnittdarstellung in Aus der Figur 3d und der Schnittdarstellung gemäß Figur 3f ist die räumliche Lage der Luftumlenkung 17 zu der Vorwärts-Austrittsöffnung 13 ersichtlich. Die Luftumlenkung 17 besteht im Wesentlichen aus einer konischen länglichen, stirnseitig verschlossenen Rinne mit in diesem Ausführungsbeispiel senkrecht zueinander angeordneten Längswänden 21. Wie aus den Figuren 3a, 3d und 3f ersichtlich, sind die Heizplatten 9 und 10 zueinander parallele angeordnet.

Figur 4 zeigt die gleichen Ansichten wie in Figur 3, wobei die Heißluftschweißdüse 5 zusammen mit dem Heißluftgerät 4 sich in der in der Figur 2 gezeigten Ruhestellung befindet. In dieser Stellung ist die Luftbremse 16 durch die Schwerkraft und begrenzt durch den Anschlag 22 (Figur 4c) nach unten geschwenkt, so dass die Luftumlenkung 17 genau vor die Vorwärts-Austrittsöffnung 13 gelangt und die ausströmende Luft zurück in Richtung der oberen und unteren Heizplatte 9 bzw. 10 lenkt (Figur 4f).

Mit der erfindungsgemäß ausgestalteten Düse können, wie vorstehend erläutert, Bitumen-Dichtungsbahnen, aber auch andere Dichtungsbahnen mit größerer Schweißgeschwindigkeit verschweißt werden.

## Patentansprüche

1. Heißluftschweißdüse (5) für eine Heißluftschweißeinrichtung (1) zum Verschweißen von überlappend angeordneten flächigen Dichtungsbahnen, insbesondere Bitumen-Dichtungsbahnen, mit einem Heißluftanschluss (7), einer oberen und einer unteren Heizplatte (9, 10), die einen Luftraum (11) bilden, und mindestens einer stirnseitigen Rückwärts-Austrittsöffnung (12) zwischen der oberen und unteren Heizplatte (9, 10), die in Schweißrichtung gesehen einer hinten an der Heißluftschweißeinrichtung (1) angeordneten Anpressrolle (6) zugewandt ist, **dadurch gekennzeichnet, dass** an der Heißluftschweißdüse (5) mindestens eine Vorwärts-Austrittsöffnung (13), der Rückwärts-Austrittsöffnung (12) gegenüberliegend, vorgesehen ist und mindestens auf der inneren, dem Heißluftanschluss (7) entfernten Seite die Heizplatten (9, 10) stirnseitig überragende Luftführungen (14) angeordnet sind.

2. Heißluftschweißdüse nach Anspruch 1, **dadurch gekennzeichnet, dass** die mindestens eine Vorwärts-Austrittsöffnung (13) einen. Luftaustrittsbereich aufweist, der sich über die gesamte Breite der durch die obere und untere Heizplatte (9, 10) gebildete Heizzone (8) ergibt.

3. Heißluftschweißdüse nach Anspruch 1 oder 2, **dadurch gekennzeichnet, dass** die obere und untere Heizplatte (9, 10) im Wesentlichen parallel zueinander angeordnet sind.

4. Heißluftschweißdüse nach einem der vorangegangenen Ansprüche, **dadurch gekennzeichnet, dass** die obere und untere Heizplatte (9, 10) Luftaustrittsöffnungen (15), vorzugsweise gleichmäßig verteilt, aufweisen.

5. Heißluftschweißdüse nach einem der vorangegangenen Ansprüche, **dadurch gekennzeichnet, dass** die Luftführungen (14) als seitlich angeordnete Führungsbleche ausgebildet sind, die sich zum freien Ende hin verjüngen.

6. Heißluftschweißdüse nach einem der vorangegangenen Ansprüche, **dadurch gekennzeichnet, dass** im Bereich der Vorwärts-Austrittsöffnung (13) eine in einer Ruhestellung der Heißluftschweißdüse (5) an der Heißluftschweißeinrichtung (1) in dem aus dieser Düse austretenden Heißluftstrom schwenkbare Luftbremse (16) angeordnet ist.

7. Heißluftschweißdüse nach Anspruch 6, **dadurch gekennzeichnet, dass** die Luftbremse (16) die aus der Vorwärts-Austrittsöffnung (13) austretende Heißluft im Wesentlichen wieder in Richtung der oberen und unteren Heizplatten (9, 10) umlenkt.

8. Heißluftschweißdüse nach Anspruch 7, **dadurch gekennzeichnet, dass** die Luftbremse (16) eine aus zwei Längswänden (21) gebildete, rinnenartige Luftumlenkeinrichtung (17) aufweist.

9. Heißluftschweißdüse nach einem der vorangegangenen Ansprüche 6 bis 8, **dadurch gekennzeichnet, dass** die Luftbremse (16) ein Laufrad (18) aufweist, welches beim Aufsetzen der Heißluftschweißdüse (5) auf eine der Dichtungsbahnen die Luftumlenkeinrichtung (17) aus dem Heißluftstrom schwenkt, auf der Dichtungsbahn mitläuft und die Luftumlenkeinrichtung (17) aus dem Heißluftstrom hält.

10. Heißluftschweißeinrichtung (1) zum Verschweißen von überlappend angeordneten flächigen Dichtungsbahnen, insbesondere Bitumen-Dichtungsbahnen, **gekennzeichnet durch** eine Heißluftschweißdüse (5) mit den Merkmalen nach einem der vorangegangen Ansprüche 1 bis 9.

## Claims

1. Hot air welding nozzle (5) for a hot air welding device (1) for welding overlapping webs of sealing material, in particular webs of bitumen, with a connection for a hot air supply (7), a top and a bottom heat plate (9, 10) forming an air space (11), and at least one rear outlet (12) between the top and bottom heat plate (9, 10) on a facing side that is oriented in welding direction to a pressure roll (6) arranged at the back of the hot air welding device (1), **characterized in that** at least one front outlet (13) opposite to the rear outlet (12) is provided at the hot air welding nozzle (5) and that at least on the inner side, i.e. the side facing away from the connection for a hot air supply (7), air guides (14) are provided that extend beyond the facing sides of the heat plates (9, 10).

2. Hot air welding nozzle according to Claim 1, **characterized in that** the at least one front outlet (13) has an air outlet area that extends over the entire width of the heating zone (8) formed by the top and the bottom heat plate (9, 10).

3. Hot air welding nozzle according to Claim 1 or 2, **characterized in that** the top and bottom heat plates (9, 10) are essentially parallel.

4. Hot air welding nozzle according to one of the preceding Claims, **characterized in that** the top and bottom heat plates (9, 10) have air outlets (15), preferably in even distribution.

5. Hot air welding nozzle according to one of the preceding Claims, **characterized in that** the air guides (14) are designed as lateral metal guide strips that taper towards the free end.

6. Hot air welding nozzle according to one of the preceding Claims, **characterized in that** an air brake (16) that can be rotated into the hot air flow exiting from the nozzle of the hot air welding device (1) when said nozzle is in rest position is installed in the area of the front outlet (13).

7. Hot air welding nozzle according to Claim 6, **characterized in that** the air brake (16) deflects the hot air exiting from the front outlet (13) essentially in the direction of the top and bottom heat plates (9, 10).

8. Hot air welding nozzle according to Claim 7, **characterized in that** the air brake (16) has a chute-type air deflection device (17) that is formed by two longitudinal walls (21).

9. Hot air welding nozzle according to one of the preceding Claims 6 to 8, **characterized in that** the air brake (16) has a wheel (18) that, when the hot air welding nozzle (5) is placed on one of the webs of sealing material, rotates the air deflection device (17) out of the flow of hot air, runs on the web of sealing material, and keeps the air deflection device (17) out of the flow of hot air.

10. Hot air welding device (1) for welding of overlapping webs of sealing material, in particular webs of sealing material made of bitumen, **characterized by** a hot air welding nozzle (5) with the characteristics listed in one of the preceding Claims 1 to 9.

## Revendications

1. Buse (5) de soudage à air chaud pour un appareil (1) de soudage à air chaud destiné à assembler par soudage des bandes d'étanchéité planes disposées en chevauchement, notamment des bandes d'étanchéité en bitume, avec un raccord d'air chaud (7), une plaque chauffante supérieure (9) et une plaque chauffante inférieure (10) qui forment une chambre d'air (11), et au moins une ouverture de sortie arrière (12) sur un côté frontal entre la plaque chauffante supérieure (9) et la plaque chauffante inférieure (10), ouverture qui, en vue dans la direction de soudage, est tournée vers un rouleau de pression (6) disposé à l'arrière sur l'appareil (1) de soudage à air chaud, **caractérisée en ce qu'**il est prévu sur la buse (5) de soudage à air chaud au moins une ouverture de sortie avant (13), à l'opposé de l'ouverture de sortie arrière (12), et des guides d'air (14) dépassant frontalement les plaques chauffantes (9, 10) sont disposés au moins sur le côté intérieur, éloigné du raccord d'air chaud (7).

2. Buse de soudage à air chaud selon la revendication 1, **caractérisée en ce que** l'ouverture de sortie avant (13) au moins unique présente une région de sortie d'air qui s'obtient sur toute la largeur de la zone de chauffage (8) formé par la plaque chauffante supérieure (9) et la plaque chauffante inférieure (10).

3. Buse de soudage à air chaud selon la revendication 1 ou 2, **caractérisée en ce que** la plaque chauffante supérieure (9) et la plaque chauffante inférieure (10) sont disposées essentiellement parallèlement entre elles.

4. Buse de soudage à air chaud selon l'une des revendications précédentes, **caractérisée en ce que** la plaque chauffante supérieure (9) et la plaque chauffante inférieure (10) présentent des ouvertures de sortie d'air (15), de préférence uniformément réparties.

5. Buse de soudage à air chaud selon l'une des revendications précédentes, **caractérisée en ce que** les guides d'air (14) sont réalisés sous la forme de tôles de guidage disposées latéralement, qui se rétrécissent vers l'extrémité libre.

6. Buse de soudage à air chaud selon l'une des revendications précédentes, **caractérisée en ce qu'**un frein d'air (16), qui dans une position de repos de la buse (5) de soudage à air chaud sur l'appareil (1) de soudage à air chaud peut pivoter dans le flux d'air chaud sortant de cette buse, est disposé dans la région de l'ouverture de sortie avant (13).

7. Buse de soudage à air chaud selon la revendication 6, **caractérisée en ce que** le frein d'air (16) renvoie l'air chaud, sortant de l'ouverture de sortie avant (13), pour l'essentiel en direction de la plaque chauffante supérieure (9) et de la plaque chauffante inférieure (10).

8. Buse de soudage à air chaud selon la revendication 7, **caractérisée en ce que** le frein d'air (16) présente un organe (17) de renvoi d'air du genre goulotte, constitué de deux parois longitudinales (21).

9. Buse de soudage à air chaud selon l'une des revendications précédentes 6 à 8, **caractérisée en ce que** le frein d'air (16) présente une roue (18) qui, lorsque la buse (5) de soudage à air chaud est placée sur une des bandes d'étanchéité, fait pivoter l'organe (17) de renvoi d'air hors du flux d'air chaud, roule sur la bande d'étanchéité et maintient l'organe (17) de renvoi d'air hors du flux d'air chaud.

10. Appareil (1) de soudage à air chaud destiné à assembler par soudage des bandes d'étanchéité planes disposées en chevauchement, notamment des bandes d'étanchéité en bitume, **caractérisé par** une buse (5) de soudage à air chaud selon l'une des revendications précédentes 1 à 9.
